# EUROPÄISCHE PATENTSCHRIFT

(11) **EP 1 729 983 B1**
(45) Veröffentlichungstag und Bekanntmachung des Hinweises auf die Patenterteilung: **12.01.2011**
(21) Anmeldenummer: 05707785.1
(22) Anmeldetag: 17.01.2005
(51) Int. Cl.: B60G 17/015, F16F 9/46

(54) **VERFAHREN ZUR REGELUNG DER DÄMPFERKRAFT BEI FAHRZEUGEN MIT EINER NIVEAUREGULIERUNG**
METHOD FOR REGULATING THE DAMPER FORCE IN VEHICLES PROVIDED WITH A LEVELLING SYSTEM
PROCEDE DE REGLAGE DE LA FORCE D'AMORTISSEUR POUR DES VEHICULES A CORRECTION D'ASSIETTE

(30) Priorität: 22.03.2004 DE 102004014329
(43) Veröffentlichungstag der Anmeldung: 13.12.2006
(73) Patentinhaber: Continental Teves AG & Co. oHG, 60488 Frankfurt (DE)
(72) Erfinder: STILLER, Alexander, 30823 Garbsen (DE); RIECKMANN, Andreas, 30173 Hannover (DE); FOLCHERT, Uwe, 31867 Lauenau (DE)
(74) Vertreter: Finger, Karsten
(86) Internationale Anmeldenummer: PCT/EP2005/050161
(87) Internationale Veröffentlichungsnummer: WO 2005/095131

(56) Entgegenhaltungen:
- DE-A1- 4 414 022
- DE-A1- 10 120 918
- US-A1- 2002 166 741
- US-B1- 6 259 982

## Beschreibung

Die Erfindung betrifft ein Verfahren zur Regelung der Dämpferkraft bei Fahrzeugen mit einer Niveauregulierung. Insbesondere ist dieses Verfahren bei Fahrzeugen mit einer pneumatischen, hydraulischen oder hydro-pneumatischen Niveauregulierung einzusetzen.

Ein solches gattungsgumäßes Verfahren ist aus der US 2002/0166741 A bekannt.

Sowohl bei Pkw als auch bei Lkw ist es möglich, das Niveau des Fahrzeugaufbaus bzw. der Ladefläche zu verändern, beispielsweise über hydraulische, pneumatische oder hydropneumatische Verstelleinrichtungen. Insbesondere bei luftgefederten Fahrzeugen ist dadurch eine Anpassung an die Belastung durch Zuladung oder eine Anpassung an das zu befahren Terrain möglich. Bei Geländewagen wird während des Off-Road-Betriebs eine höhere Bodenfreiheit eingestellt, während im Straßenbetrieb der Schwerpunkt nach unten verlagert wird, um eine bessere Straßenlage zu gewährleisten.

Bei aktiven oder semiaktiven Fahrwerken kann zudem eine Regulierung der Dämpferkraft vorgenommen werden, um die Dämpfung des Fahrwerkes an die Fahrsituationen anzupassen.

Aufgabe der vorliegenden Erfindung ist es, ein Verfahren zur Regelung der Dämpferkraft bei Fahrzeugen mit einer Niveauregulierung bereitzustellen, das eine hohe Verstellgeschwindigkeit und eine exakte Anpassung auf das gewünschte Niveau ermöglicht.

Erfindungsgemäß wird diese Aufgabe dadurch gelöst, dass bei aktivierter Niveauregulierung ein Signal erzeugt und an eine Dämpferkraftregulierungseinrichtung, beispielsweise ein am Dämpfer angeordnetes, elektrisch aktuierbares Ventil, übermittelt wird, mit der die Dämpferkraft während der aktivierten Niveauregulierung verändert wird.

Normalerweise arbeitet bei einer Veränderung des Fahrzeugaufbauniveaus die Dämpferregelung gegen die Niveauregulierung, da das Dämpferregelsystem das Signal erhält, dass eine Veränderung des Abstandes zwischen der Radachse und dem Fahrzeugaufbau erfolgt. Um diese Veränderung auszugleichen, wird eine erhöhte Dämpfung bereitgestellt, da das Dämpferregelsystem nicht unterscheidet, ob die Niveauveränderung gewollt ist oder aufgrund fahrdynamischer Einwirkungen erfolgt.

Für das erfindungsgemäße Verfahren wird die Dämpferkraft während der aktivierten Niveauregulierung verändert, um eine möglichst schnelle und exakte Verstellung des Aufbauniveaus auf den gewünschten Sollwert zu erreichen.

Eine Weiterbildung der Erfindung sieht vor, dass die Anpassung der Dämpferkraft dergestalt erfolgt, dass eine Reduzierung der Dämpferkraft vorgenommen wird, um eine möglichst schnelle und unbehinderte Verstellung des Aufbauniveaus zu erreichen. Nach Erreichen des Sollwertes bzw. bei Erreichen eines vorgegebenen Abschaltwertes wird die Dämpferkraft wieder auf den voreingestellten Wert zurückgeregelt.

Um ein Überschwingen bei einer Verstellung des Niveaus zu vermeiden, ist ebenfalls vorgesehen, dass die Dämpferkraft kurzfristig über den vor der Niveauregulierung eingestellten Wert erhöht wird, um ein Überschwingen bei einer Niveauveränderung des Fahrzeugaufbaus zu vermeiden. Dies ist insbesondere bei geschlossenen Luftversorgungsanlagen sinnvoll, da über solche geschlossenen Luftversorgungsanlagen eine sehr hohe Verstellgeschwindigkeit des Fahrzeugaufbaus erreicht werden kann. Das Überschwingen der Sollregellage wird dadurch verhindert, dass die Dämpferkraft kurzfristig erhöht wird. Dies ist möglich, da die Verstellung des Dämpfers wesentlich schneller als die Verstellung des Fahrzeugaufbauniveaus erfolgt.

Eine Weiterbildung der Erfindung sieht vor, dass das an die Dämpferkraftregulierungseinrichtung gesendete Signal eine Information über die Regelgeschwindigkeit beinhaltet, also mit welcher Geschwindigkeit der Fahrzeugaufbau abgesenkt oder angehoben wird. Die Dämpferkraft wird dann in Abhängigkeit von der Regelgeschwindigkeit reduziert bzw. erhöht, um möglichst präzise das angestrebte Niveau des Fahrzeugaufbaus einstellen zu können. Je schneller der Fahrzeugaufbau angehoben wird, desto eher neigt das System zum Überschwingen, so dass eine entsprechend höhere Dämpferkraft eingestellt werden muss.

Darüber hinaus ist es vorgesehen, dass die Dämpferkraft nur bei Regelgeschwindigkeiten reduziert wird, die in einem durch Grenzwerte festgelegten Bereich liegen. Dieser Bereich ist der Geschwindigkeitsbereich, in dem die Niveauregulierung stattfindet, wenn sie von einem Nutzer initiiert wird. Bei Überschreiten der Grenzwerte, beispielsweise durch Bremsmanöver oder fahrdynamisch relevanten Situationen, wird die Dämpferkraft erhöht bzw. ein Eingriff in die normale Dämpferkraftregulierung abgeschaltet.

Eine Weiterbildung der Erfindung sieht vor, dass die Regelgeschwindigkeit vorab, insbesondere bei Fahrtantritt, ermittelt wird und dass anhand der ermittelten Regelgeschwindigkeit ein Parameter für die Anpassung der Dämpferkraft ermittelt wird. Die Regelgeschwindigkeit hängt unter anderem von der Beladung des Fahrzeuges ab, bei einer hohen Beladung erfolgt ein Anheben des Fahrzeugaufbaus langsamer als bei einer geringen Beladung. Entsprechend der einmal festgelegten Regelgeschwindigkeit für die Niveauregulierung wird dann die Dämpferkraft ermittelt, bzw. ein Parameter festgelegt, mit dem die Dämpferkraft während der aktivierten Niveauregulierung angepasst wird. Wird die Dämpferkraft zunächst reduziert, um eine Verstellung zu erleichtern und anschließend erhöht, um ein Überschwingen zu vermeiden, können mehrere Parameter festgelegt werden.

Ebenfalls ist es vorgesehen, dass eine Anpassung der Dämpferkraft in Abhängigkeit von Parametern erfolgt die Rückschlüsse auf fahrdynamische Zustände zulassen, insbesondere der Lenkbewegung, dem Lenkwinkel, dem Bremsdruck oder Beschleunigungskräften, insbesondere Quer- oder Längsbeschleunigungskräften. Diese Parameter werden im Fahrbetrieb ermittelt und geben Anhaltspunkte dafür, in welchem fahrdynamische Zustand sich das Fahrzeug befindet. Bei aktivierter Niveauregulierung und einem hohen Bremsdruck wird auf diese Art und Weise die Reduzierung der Dämpferkraft abgeschaltet, da durch das Erkennen eines vorgegebenen Bremsdruckes auf ein Bremsmanöver geschlossen wird, was eine Dämpferkrafterhöhung aus fahrsicherheitstechnischen Gründen zur Folge hat. Dementsprechend wird die Reduzierung der Dämpferkraft aufgrund einer aktivierten Niveauregulierung ausgesetzt. Gleiches gilt bei entsprechenden Lenkbewegungen, die auf einen Spurwechsel schließen lassen oder den Lenkwinkel, der Rückschlüsse auf Querbeschleunigungen zulässt.

Durch das beanspruchte Verfahren und die Weiterbildung ist es möglich, einen Niveausollwert auch bei großen Regelgeschwindigkeiten und großer Dämpfung exakt einzustellen, so dass die Dämpferregelung eine Niveauregulierung nicht behindert. Darüber hinaus kann eine schnelle Niveauregelgeschwindigkeit erreicht werden, da sich eine Dämpferverhärtung nicht nachteilig auf die Verstellung auswirkt.

Als Dämpferkraftregulierungseinrichtungen sind insbesondere Ventile vorgesehen, die elektrisch geschaltet werden können und mit denen in sehr kurzer Zeit Dämpferkräfte über einen großen Umfang verändert werden können. Die Regelung der Dämpferkraft erfolgt somit in Abhängigkeit davon, ob eine Niveauregulierung vorgesehen ist und in welchem Stadium sich die Niveauregulierung befindet. Fahrdynamisch kritische Dämpfereingriffe, beispielsweise bei Kurvenfahrten oder während Bremsmanövern, bleiben jedoch unbeeinflusst.

Wenn normalerweise die Dämpferregelung über ein Skyhook-Algorithmus erfolgt, wird dieser Skyhook-Algorithmus bei aktivierter Niveauregelung deaktiviert und der Dämpfer weich gestellt. Im Skyhook-Algorithmus wird die Dämpfergeschwindigkeit um den Betrag der Regelgeschwindigkeit reduziert, so dass Eingriffe bei Aufbaubewegungen nicht oder nicht mehr so heftig erfolgen. Bei kritischen Fahrsituationen wird trotz aktivierter Niveauregelung der Skyhook-Algorithmus aktiviert.

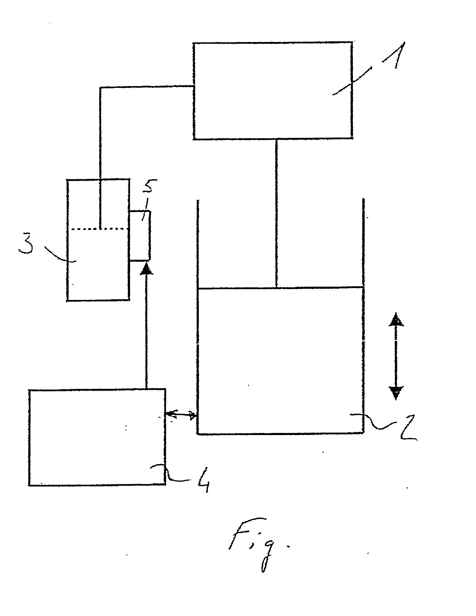

Die einzige Figur zeigt eine schematische Darstellung eines Federmassesystems, bei der die Masse 1 den Fahrzeugaufbau repräsentiert, der über eine Luftfeder 2 gegenüber dem Rad abgestützt ist. Dem Massefedersystem 1, 2 ist ein Dämpfer 3 zugeordnet, über den unterschiedliche Dämpfungsgrade eingestellt werden können. Bei aktivierter Niveauregulierung, die beispielsweise über eine Steuereinheit 4 durch Ablassen von Druckluft aus der Luftfeder 2 oder Beaufschlagung der Luftfeder 2 mit einem erhöhten Luftdruck durchgeführt wird, wird gleichzeitig ein Signal an den Dämpfer 3 übermittelt, so dass die Dämpferkraft angepasst werden kann, wenn die Niveauregulierung aktiviert ist. Das Signal bzw. die Information wird dabei an eine Dämpferkraftregulierungseinrichtung 5 übermittelt, das als ein elektrisch betätigbares Ventil ausgebildet ist, mit dem sehr schnell die Anpassung der Dämpferkraft an das gewünschte Dämpferkrafuriveau erfolgen kann.

## Patentansprüche

1. Verfahren zur Regelung der Dämpferkraft bei Fahrzeugen mit einer Niveauregulierung, **dadurch gekennzeichnet, dass** bei aktivierter Niveauregulierung ein Signal erzeugt und an eine Dämpferkraftregulierungseinrichtung (5) übermittelt wird und dass die Dämpferkraft während der aktivierten Niveauregulierung angepasst wird.

2. Verfahren nach Anspruch 1, **dadurch gekennzeichnet, dass** die Dämpferkraft reduziert oder erhöht wird.

3. Verfahren nach Anspruch 1 oder 2, **dadurch gekennzeichnet, dass** das Signal eine Information über die Regelgeschwindigkeit beinhaltet und die Dämpferkraft in Abhängigkeit von der Regelgeschwindigkeit angepasst wird.

4. Verfahren nach einem der voranstehenden Ansprüche, **dadurch gekennzeichnet, dass** die Dämpferkraft nur bei Regelgeschwindigkeiten reduziert wird, die in einem durch Grenzwerte festgelegten Bereich liegen und dass bei Überschreiten der Grenzwerte die Dämpferkraft erhöht wird.

5. Verfahren nach einem der voranstehenden Anspruch, **dadurch gekennzeichnet, dass** die Regelgeschwindigkeit vorab ermittelt wird und anhand der ermittelten Regelgeschwindigkeit ein Parameter für die Anpassung der Dämpferkraft ermittelt wird.

6. Verfahren nach einem der voranstehenden Ansprüche, **dadurch gekennzeichnet, dass** eine Anpassung der Dämpferkraft in Abhängigkeit von der Lenkbewegung, dem Lenkwinkel, dem Bremsdruck und/oder ermittelten Beschleunigungskräften erfolgt.

## Claims

1. Method for controlling the damper force in vehicles having a ride level control system, **characterized in that** when the ride level control system is activated a signal is generated and transmitted to a damper force control device (5), and **in that** the damper force is adapted while the ride level control system is activated.

2. Method according to Claim 1, **characterized in that** the damper force is reduced or increased.

3. Method according to Claim 1 or 2, **characterized in that** the signal contains information about the control speed, and the damper force is adapted as a function of the control speed.

4. Method according to one of the preceding claims, **characterized in that** the damper force is reduced only at control speeds which lie in a range defined by limiting values, and **in that** the damper force is increased when the limiting values are exceeded.

5. Method according to one of the preceding claims, **characterized in that** the control speed is determined in advance and a parameter for the adaptation of the damper force is determined by reference to the control speed which is determined.

6. Method according to one of the preceding claims, **characterized in that** the damper force is adapted as function of the steering movement, the steering angle, the brake pressure and/or acceleration forces which are determined.

## Revendications

1. Procédé de réglage de la force d'amortissement pour des véhicules à correction d'assiette, **caractérisé en ce que** lorsque la correction d'assiette est activée, un signal est produit et est transmis à un dispositif de réglage de la force d'amortissement (5) et **en ce que** la force d'amortissement est adaptée pendant que la correction d'assiette est activée.

2. Procédé selon la revendication 1, **caractérisé en ce que** la force d'amortissement est réduite ou accrue.

3. Procédé selon la revendication 1 ou 2, **caractérisé en ce que** le signal contient une information concernant la vitesse de régulation et la force d'amortissement est adaptée en fonction de la vitesse de régulation.

4. Procédé selon l'une quelconque des revendications précédentes, **caractérisé en ce que** la force d'amortissement n'est réduite que dans le cas de vitesses de régulation qui se situent dans une plage fixée par des valeurs limites, et **en ce qu'**en cas de dépassement des valeurs limites, la force d'amortissement est accrue.

5. Procédé selon l'une quelconque des revendications précédentes, **caractérisé en ce que** la vitesse de régulation est déterminée au préalable et un paramètre pour l'adaptation de la force d'amortissement est déterminé à l'aide de la vitesse de régulation déterminée.

6. Procédé selon l'une quelconque des revendications précédentes, **caractérisé en ce qu'**une adaptation de la force d'amortissement a lieu en fonction du mouvement de braquage, de l'angle de braquage, de la pression des freins et/ou de forces d'accélération détectées.
